# EUROPEAN PATENT SPECIFICATION

(11) **EP 2 275 726 B1**
(45) Date of publication and mention of the grant of the patent: **23.05.2012**
(21) Application number: 10176110.4
(22) Date of filing: 08.03.2007
(51) Int. Cl.: F16K 15/04, F16K 15/06, F16K 17/04

(54) **Valve assemblies**
Ventilanordnungen
Ensembles de soupape

(30) Priority: 08.03.2006 GB 0604686
(43) Date of publication of application: 19.01.2011
(62) Divisional of application: 07250966.4
(73) Proprietor: Delphi Technologies Holding S.à.r.l., 4940 Bascharage (LU)
(72) Inventor: Arnold, Jonathan, Ringwood, Hampshire BH24 3AA (GB)
(74) Representative: Gregory, John David Charles

(56) References cited:
- DE-A1- 4 435 493
- DE-A1- 19 927 197
- DE-A1-102004 040 222
- US-A- 3 055 388
- US-A1- 2005 126 638
- US-A1- 2005 217 730

## Description

The present invention relates to valve assemblies, and more particularly to valve assemblies for use in a common-rail fuel injection system for supplying high-pressure fuel to a compression ignition internal combustion engine, such as a diesel engine.

In such compression ignition internal combustion engines, fuel is pumped to the fuel injection system by applying high-pressure pulses to the fuel which cause the pump outlet valve to open, thereby enabling a predetermined amount of fuel to pass into the common rail injection system.

In order to increase performance of such internal combustion engines, it is expected that the pumps will be run at higher flow rates and at higher pressures. However, to accommodate such changes it will be necessary to modify the structure of the outlet valve.

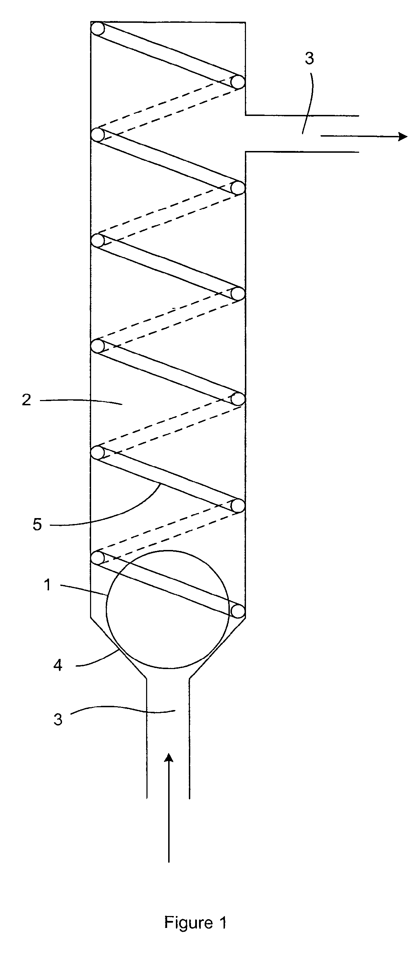

A typical outlet valve is illustrated schematically in Figure 1 and consists of a metallic ball 1 which is located within a wide-bore region 2 of a conduit 3 through which the fuel is caused to pass in the direction of the arrow, from the pump to the fuel injection system. When closed, the ball 1 is biased against a conical seating 4 at the entrance to the wide-bore region 2 by means of a compression spring 5. When the fuel pressure difference across the valve assembly exceeds a predetermined value, the ball 1 is lifted from the conical seating 4, thereby permitting fuel to pass.

As can be seen from Figure 1, the diameter of the metallic ball 1 is less than that of the wide-bore region 2 of the conduit 3, thereby enabling fuel to pass in the resulting gap when the valve is open.

However, this arrangement gives rise to an undesirable lateral nutation of the ball, which, in turn, causes undesirable vibrations and resonances.

US 5,183,075, in attempting to solve this problem, provides a valve element with a spherical surface portion having a diameter substantially equal to that of the conduit in which the valve element moves, but which contains axially aligned recesses in which the fluid can flow between the element and the wall of the conduit. However, this arrangement requires the spherical surface portion to adopt a predetermined orientation within the conduit, in order that the recesses are maintained at the correct alignment, and is also likely to give rise to a weakening of the valve element.

In the present Applicant's co-pending European Patent Application No. 1 701 073, there is described an alternative solution to this problem. A ball is provided, again with a diameter substantially equal to that of the conduit in which the ball moves, but the conduit is formed with three axially aligned external recesses through which the fluid can pass.

It would be desirable to provide arrangements which enable the fluid to pass the ball, which do not give rise to such vibrations and in which the strength of the ball is not compromised.

By way of background to the invention, US-A-2005/0217730 discloses a floating ball check valve including a body having an outlet port and a cap, having an inlet port, joined with the body. A ball guide is slidably received within the body and has a ball pocket for receiving a sealing ball. The check valve also has a biasing spring for biasing the ball toward the inlet port.

According to the invention, there is provided a valve assembly for controlling the flow of fluid, comprising a ball defining a ball volume and being engageable with a valve seating region to prevent the flow of fluid through a conduit having an internal wall; biasing means for urging the ball into engagement with the valve seating region; and a piston defining a piston volume and being located between the biasing means and the ball and arranged, in use, to move within the conduit against the force of the biasing means when the ball is acted on by fluid under pressure entering the valve assembly, wherein the ball is made from a first material and the piston is made from a second material, wherein the mass of the ball is defined by the product of the ball volume and the density of the first material, and the mass of the piston is defined by the product of the piston volume and the density of the second material; and wherein the density of the second material is greater than the density of the first material; and the combined mass of the ball and the piston is equal to or greater than the product of the ball volume and the density of the second material. Preferably, the first material is a ceramic material, such as silicon nitride. The second material may be a metallic material.

The combination of a relatively low-density ball and a relatively high-density piston facilitates the use of a low-density material with wear-resistant properties as the material of the ball, while at the same time providing sufficient inertia, by way of the relatively heavy piston, to the ball and piston combination to ensure the peak velocity of the ball is relatively low, for example to avoid excessive stresses on the components of the valve assembly.

Optionally, the ball is attached to the piston so as to form a composite component.

Preferred embodiments of the present invention will now be described with reference to the following drawings, in which the same reference numerals have been used to indicate corresponding features:
Figure 1 is a cross-sectional representation of a known form of valve assembly;
Figure 2 is a cross-sectional representation of a preferred embodiment of valve assembly in accordance with the present invention;
Figure 3 is a cross-sectional representation of an alternative embodiment of ball valve assembly in accordance with the present invention;
Figure 4 is a cross-sectional representation of an embodiment similar to that shown in Figure 3, but wherein the profile of the valve seating region is different; and
Figure 5 is a cross-sectional representation of an embodiment similar to that shown in Figure 3, but with an additional insert to retain a ball of reduced size relative to the diameter of the inlet conduit.

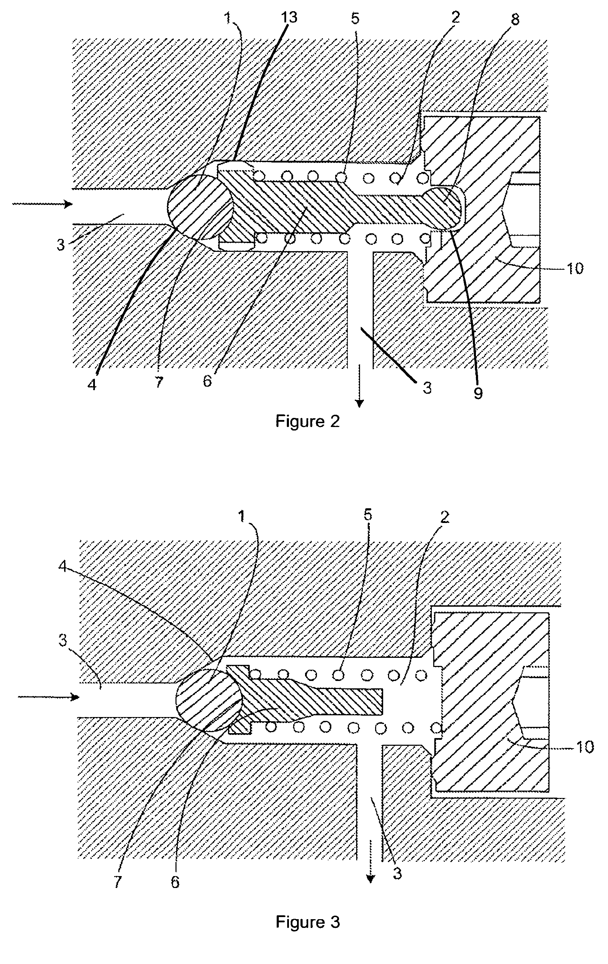

Referring to Figure 2, a valve assembly in accordance with a preferred embodiment of the present invention is arranged within a wide-bore region 2 within a fluid conduit 3. The valve assembly comprises a ceramic ball I and a piston 6 biased into a closed position against a conical seating 4 within the conduit 3 by means of a helical compression spring 5. The ceramic ball is made from silicon nitride and has a diameter of about 5 mm. The cone angle of the conical seating 4 is about 65°.

The head of the piston 6 is formed with a hemispherical depression 7 which mates with the spherical surface of the ball 1 and which retains it in a central position within the wide-bore region 2 of the conduit 3. The outer edge of the piston head is formed with a number of recesses in the form of flutes which permit the flow of fluid between the head of the piston 6 and the internal wall of the conduit 3. The recesses are arranged to define four arms which together form a cruciform shape in cross-section. Each arm has a curved end surface 13 which bears upon the internal wall of the conduit, so that the head of the piston 6 has a barrel-shaped envelope. The other end of the piston 6 is formed with a rounded projection 8 which mates with a corresponding recess 9 of a module 10 of the valve housing. Such a projection 8 is highly advantageous in that is permits a high degree of axial misalignment between the conical seating 4, the wide-bore region 2 of the conduit 3 and the module 10, while still providing guiding, damping and stopping of the ball 1.

In operation, fluid is pumped at high pressure into the conduit 3 in the direction of the arrow. This causes the ball 1 to lift away from its conical seating 4 and to force the piston 6 along the conduit 3 against the biasing force of the helical compression spring 5. The fluid is therefore allowed to flow into the wide-bore region 2 of the conduit 3 and, by means of the recesses in the piston head, through to the outlet of the conduit 3, again in the direction of the arrow.

The extent of movement of the ball 1 and the piston 6 is limited by the mating of the rounded projection 8 of the piston 6 with the recess 9 in the valve housing. The rounded projection 8 forms a close fit within the housing recess 9, so that the movement of the ball 1 and the piston 6 away from its closed position is damped by virtue of the fluid which is trapped between the projection 8 and the housing recess 9. This damping arrangement has been found to be effective and to operate substantially independently of temperature variations.

When the fluid pressure subsides, the biasing force of the helical compression spring 5 causes the ball I and the piston 6 to return to their closed positions. However, it will be appreciated that the damping force arising from the presence of trapped fluid in the housing recess 9 does not restrict to any appreciable extent the return movement of the ball 1 and piston 6, so that the valve is closed substantially immediately after a reduction of pressure in the fluid supply from the pump.

The curved end surfaces 13 of the arms at the head of the piston 6 serve as guiding means which inhibit lateral movement of the piston within the conduit 3, in particular when the ball 1 lifts away from the seating 4. Therefore, by virtue of the curved end surfaces 13 and the rounded projection 8, the piston 6 is guided within the conduit 3, even if a high degree of axial misalignment exists between the conical seating 4, the wide-bore region 2 of the conduit 3 and the module 10. If such misalignment does exist, a central longitudinal axis of the piston 6 forms a non-zero angle with the longitudinal axis of the wide-bore region 2 of the conduit 3. In other words, the piston 6 is articulated between the module 10 and the conduit 3.

This arrangement allows for manufacturing tolerances in the alignment of the component parts of the valve assembly, and for manufacturing tolerances in the parts themselves, for example in the concentricity of the module 10. In a typical example, the longitudinal axis of the piston 6 may lie at an angle of 1 or 2 degrees from the longitudinal axis of the wide-bore region 2 of the conduit 3. However, the piston and conduit axes may be misaligned by a significantly larger angle, for example 20 degrees, without impairing the functionality of the valve assembly.

Figure 3 illustrates an alternative embodiment in which only the ceramic ball 1, the piston 6 and the helical compression spring 5 are included in the wide-bore section 2 of the valve assembly. Thus, in this arrangement, there are no recesses in the edge of the head of the piston 6 nor any means of limiting or damping the movement of the ball 1 and piston 6 away from the closed position.

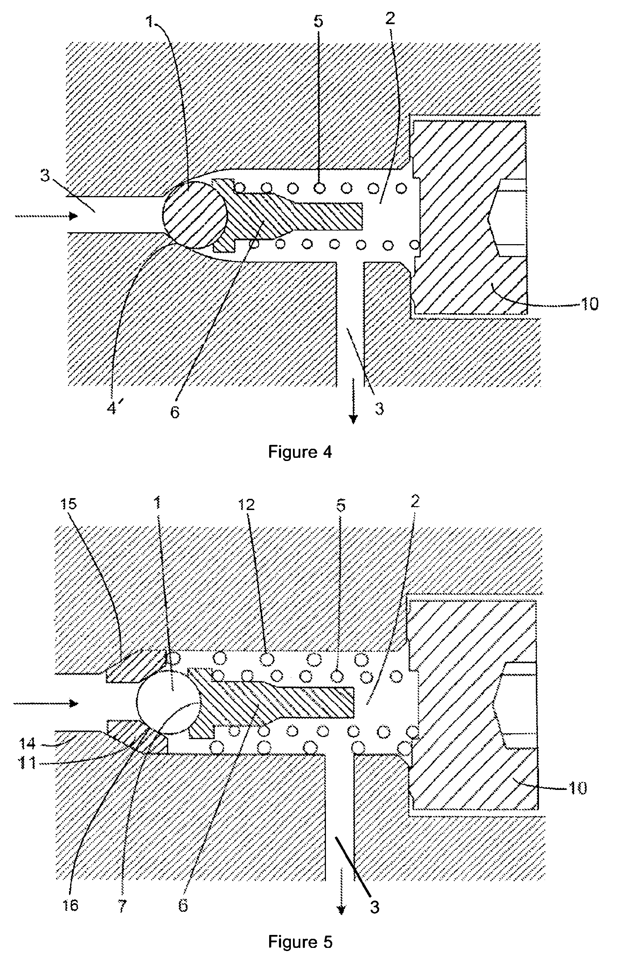

Figure 4 illustrates an alternative arrangement to that shown in Figure 3, in which the valve seating 4' within the conduit 3 is formed with a curved profile so as to provide a greater area of contact with the spherical ball 1.

In Figure 5, there is shown an alternative embodiment which is suitable for arrangements in which the diameter of the ball 1 is smaller than that of a narrow-bore region 14 of the conduit 3, upstream of the wide-bore region 2. As in the previous embodiments of the invention, the transition between the narrow-bore region 14 and the wide-bore region 2 of the conduit 3 comprises a frusto-conical face 15. Unlike the previous embodiments, however, the frusto-conical face 15 of the conduit 3 does not form a seating surface for the ball 1. Instead, in order to effect a sealing of the valve, an insert 11 is provided which is in the form of an annulus with a cross-section in the form of a heptagon. Two of the opposing sides of the insert 11 define respective inner and outer frusto-conical faces. The inner frusto-conical face 16 of the insert 11 provides a seating surface for the ball 6. The outer frusto-conical face is clamped in position on the frusto-conical face 15 of the conduit 3 by means of an outer helical compression spring 12 which is wound in the opposite sense to that of the inner compression spring 5, so as to prevent interlocking of the two springs.

The outer compression spring 11 additionally serves the functions of guiding the ball, allowing fluid to pass around the ball and discouraging nutation, not only by guiding the ball, but possibly also by biasing the vortex shedding so as to prevent chaotic movement of the fluid. To this end, the inner diameter of the outer compression spring substantially matches the diameter of the ball.

Although not shown in detail in Figure 5, the outermost surface of the insert 11 which is in contact with the frusto-conical face 15 of the conduit 3 is in the form of two frusto-conical surfaces having a very small difference in cone angle, e.g. 1°, which meet to form an annular ridge or sharp circular edge which forms a seal with the conduit wall when under pressure. The small angle between the two surfaces ensures that the resulting stresses are low.

In any embodiment of the invention, the ball 1 may be made from a ceramic material, while the piston 6 may be made from a metallic material. In such a case, the combined mass of the ball 1 and the piston 6, taken together, is equal to or greater than the mass of a ball with the same dimensions as the ceramic ball 1, but made from the metallic material of the piston 6. In this way, the combination of the ceramic ball 1 and the metallic piston 6 offers the desirable wear-resistance properties of a ceramic ball, while at the same time providing sufficient inertia to the ball and piston combination to ensure the peak velocity of the ball 1 is relatively low, for example to avoid excessive stresses on the spring 5.

It is conceivable that the ball and piston may be joined to one another, so as to form a piston having an integral ceramic head region.

It will be appreciated that combinations of features not described in the embodiments above are also possible, as set out in the appended claims. By way of further example, an outer compression spring as described with reference to Figure 5 may be provided even when no insert is present, to act as a guide for the ball.

## Claims

1. A valve assembly for controlling the flow of fluid, comprising:
a ball (1) defining a ball volume and being engageable with a valve seating region (4) to prevent the flow of fluid through a conduit (3) having an internal wall;
biasing means (5) for urging the ball (1) into engagement with the valve seating region (4); and
a piston (6) defining a piston volume and being located between the biasing means (5) and the ball (1) and arranged, in use, to move within the conduit (3) against the force of the biasing means (5) when the ball (1) is acted on by fluid under pressure entering the valve assembly;
wherein:
the ball (1) is made from a first material and the piston (6) is made from a second material,
the mass of the ball (1) is defined by the product of the ball volume and the density of the first material, and the mass of the piston (6) is defined by the product of the piston volume and the density of the second material;
**characterised in that**:
the density of the second material is greater than the density of the first material; and
the combined mass of the ball (1) and the piston (6) is equal to or greater than the product of the ball volume and the density of the second material.

2. A valve assembly as claimed in Claim 1, wherein the first material is a ceramic material.

3. A valve assembly as claimed in Claim 2, wherein the first material is silicon nitride.

4. A valve assembly as claimed in any preceding Claim, wherein the second material is a metallic material.

5. A valve assembly as claimed in any preceding Claim, wherein the ball (1) is attached to the piston (6) so as to form a composite component.

## Patentansprüche

1. Ventilanordnung zum Regeln der Strömung eines Fluids, umfassend:
eine Kugel (1), die ein Kugelvolumen definiert und mit einer Ventilsitzregion (4) in Eingriff gebracht werden kann, um das Strömen von Fluid durch eine Leitung (3), die eine Innenwand hat, zu verhindern,
eine Vorspanneinrichtung (5) zum Drängen der Kugel (1) in Eingriff mit der Ventilsitzregion (4) und
einen Kolben (6), der ein Kolbenvolumen definiert und sich zwischen der Vorspanneinrichtung (5) und der Kugel (1) befindet und im Gebrauch angeordnet ist, um sich in der Leitung (3) gegen die Kraft der Vorspanneinrichtung (5) zu bewegen, wenn in die Ventilanordnung eintretendes, unter Druck stehendes Fluid auf die Kugel (1) wirkt,
wobei:
die Kugel (1) aus einem ersten Material hergestellt ist und der Kolben (6) aus einem zweiten Material hergestellt ist,
die Masse der Kugel (1) von dem Produkt des Kugelvolumens und der Dichte des ersten Materials definiert wird und die Masse des Kolbens (6) von dem Produkt des Kolbenvolumens und der Dichte des zweiten Materials definiert wird,
**dadurch gekennzeichnet, dass**
die Dichte des zweiten Materials größer als die Dichte des ersten Materials ist und
die kombinierte Masse der Kugel (1) und des Kolbens (6) so groß wie oder größer als das Produkt des Kugelvolumens und der Dichte des zweiten Materials ist.

2. Ventilanordnung nach Anspruch 1, wobei das erste Material ein keramisches Material ist.

3. Ventilanordnung nach Anspruch 2, wobei das erste Material Siliziumnitrid ist.

4. Ventilanordnung nach einem der vorhergehenden Ansprüche, wobei das zweite Material ein metallisches Material ist.

5. Ventilanordnung nach einem der vorhergehenden Ansprüche, wobei die Kugel (1) an dem Kolben (6) angebracht ist, um ein zusammengesetztes Bauteil zu bilden.

## Revendications

1. Ensemble formant valve pour commander l'écoulement d'un fluide, comprenant :
une bille (1) définissant un volume de bille et susceptible d'être engagée avec une région formant siège de valve (4) pour empêcher l'écoulement de fluide à travers un conduit (3) ayant une paroi interne ;
des moyens de sollicitation (5) pour forcer la bille (1) en engagement avec la région formant siège de valve (4) ; et
un piston (6) définissant un volume de piston et étant situé entre les moyens de sollicitation (5) et la bille (1) et agencé, en utilisation, pour se déplacer dans le conduit (3) à l'encontre de la force des moyens de sollicitation (5) lorsque la bille (1) subit une action de la part du fluide sous pression qui entre dans l'ensemble formant valve ;
dans lequel
la bille (1) est réalisée d'un premier matériau et le piston (6) est réalisé d'un second matériau,
la masse de la bille (1) est définie par le produit du volume de la bille par la densité du premier matériau, et la masse du piston (6) est définie par le produit du volume du piston par la densité du second matériau ;
**caractérisé en ce que**
la densité du second matériau est supérieure à la densité du premier matériau ; et
la masse combinée de la bille (1) et du piston (6) est égale ou supérieure au produit du volume de la bille par la densité du second matériau.

2. Ensemble formant valve selon la revendication 1, dans lequel le premier matériau est un matériau céramique.

3. Ensemble formant valve selon la revendication 2, dans lequel le premier matériau est du nitrure de silicium.

4. Ensemble formant valve selon l'une quelconque des revendications précédentes, dans lequel le second matériau est un matériau métallique.

5. Ensemble formant valve selon l'une quelconque des revendications précédentes, dans lequel la bille (1) est attachée au piston (6) de manière à former un composant composite.
